# EUROPEAN PATENT SPECIFICATION

(11) **EP 4 464 905 B1**
(45) Date of publication and mention of the grant of the patent: **08.04.2026**
(21) Application number: 24176406.7
(22) Date of filing: 16.05.2024
(51) Int. Cl.: F16B 37/04, F16B 47/00, F16B 11/00

(54) **COMPOSITE THREADED STANDOFF UNIT**
KOMPOSIT GEWINDETRAGENDE ABSTANDSEINHEIT
UNITÉ D'ÉCARTEMENT FILETÉE COMPOSITE

(30) Priority: 16.05.2023 IN 202341034356
(43) Date of publication of application: 20.11.2024
(73) Proprietor: TE Connectivity India Private Limited, K.R. Puram Hobli, Bangalore 560066 (IN); Deutsch India Power Connectors Private Limited, Bangalore 560066, Karnataka (IN)
(72) Inventor: AMBAT, Rejish, 560066 Bangalore (IN); HEGDE KUNDAPURA, Niranjan, 560066 Bangalore (IN); KARABAILU NAGALAKKANA GOWDA, Manjesh Gowda, 560066 Bangalore (IN); ABDUL GHANI, Samee Mohammed, 560048 Bangalore (IN)
(74) Representative: Johnstone, Edward Ian

(56) References cited:
- EP-B1- 1 763 639
- EP-B1- 1 772 635
- US-A1- 2007 059 994

## Description

The present invention in general relates to a supporting mechanism and structure thereof which is configured to be attached to a mounting surface to bear hardware components such as cables, conduits etc. with the help of adjustable clamps or clips. More particularly, the invention relates to a composite threaded standoff unit having an adhesive based bonding surface, and its improvement regarding securing to the mounting surface.

Standoff units are commonly used to support cables and conduits in various indoor and outdoor applications. These standoff units are typically made of materials such as metals and plastic and come in a range of sizes and configuration to accommodate different cable and conduit size. Standoff units are well known for their use in a variety of sectors such as aerospace, industrial and automotive applications for supporting such cables and conduits relating to electrical, pneumatic and/or hydraulic service lines. A typical standoff unit comprises a base portion adapted for a secure mounting onto the mounting surface.

The base portion comes in combination with an elongated standoff column projecting outwardly a short distance from the base structure. In the conventional standoff units, the standoff column having the base portion is moulded as a single component. Next a separately moulded component having a threaded portion such as a nut is inserted into the cavity of the standoff column. Further, an elongated plug can be inserted within said standoff column and thereby further interacting with the threaded nut and retaining it. The threaded nut portion is adapted for thread-in engagement with a mating fastener such as a suitable bolt or screw used for mounting and the above discussed, such as an electrical wiring bundle or the like, generally at a distal or free end of the standoff unit. Thus, disadvantageously, the increased number of components leads to complex working technique of said standoff unit with increased carbon foot-print. Further, this moulding and assembling processes induces additional assembly time and failures due to improper assembling.

Now, in case of application of the standoff units to body panels of certain ground vehicles, air crafts, space-bound vehicles used in aerospace etc., where the structural integrity is of a prominent importance, the base portion of the standoff unit may be adapted for adhesive bonded mounting. This mounting method using adhesives on a bonding surface of the base portion avoids that need to form one or more holes in the substrate to put in engagement screws.

In many application, a bunch of conduits having a substantial weight need to be supported using these standoff units. Accordingly, to provide a sturdy fixation of the standoff units with the mounting surface, it is often considered to use a reliable adhesive, such as acrylic-based adhesive, rubber-based adhesive, epoxy adhesives, silicon adhesives etc. It is known in the art to put these types of adhesives on the bonding surface and to apply the standoff unit to a mounting surface using an applicator. The applicator generally is used to apply pressure to the standoff units against the mounting surface, giving the adhesive enough time for curing, ensuring a proper seating of the standoff units.

Conventionally, the adhesives, in gel or other semi-liquid form, are poured onto the bonding surface and stuck on the mounting surface without considering the amount of adhesive and the weight increment because of the excess adhesive. However, in case of air-craft and space-bound vehicles, weight of the machines and components installed therein is of great concern, more so, because of the huge number of cable harness mounting brackets that are used. Additional weight of said excess adhesive thus affects in a cumulative manner.

A known way of addressing such problem is to use a specific type of adhesive having glass beads. Due to the added glass beads as reinforcing agent, the adhesive properties are increased which is one of the reasons of their application in automotive, aerospace and construction industries. These glass beads are generally spherical in shape, having a predetermined diameter. Thus these types of adhesives provide some dimensional standard regarding thickness of the adhesive used on the bonding surface. However, disadvantageously, one has to always depend on the standard set by the adhesive manufactures in addition to the possibility of uneven diameter of glass beads.

Furthermore, presently, remarkable improvements on numerous properties of adhesives are being carried out to drastically reduce the curing time thereof. Thus, it is often required or desired to use adhesive without glass beads to minimize the curing time while maintaining optimal thickness of the adhesive layer (bond-line thickness). Thus it is required to have predefined optimum bond-line thickness while installing standoff units, regardless of the type of adhesive used. However, known standoff units do not include features dedicated to meet the requirements as discussed.

EP1772635B1, upon which the pre-characterising portion of Claim 1 is based, discloses a standoff unit comprising a base that is configured to be attached to a surface of a panel, and a column that extends upwardly from the base and includes a snap element or internal threading that is configured to interact with a fastener.

With a view therefore to overcome the technical problems associated with conventional standoff units and their mounting methods, the inventors felt the need to develop a novel standoff unit working towards achieving an optimum bond-line thickness and at the same time reducing the number of moulded components and reducing the weight thereof without compromising structural integrity.

The solution is provided by a composite standoff unit for attaching on a mounting surface according to claim 1.

The composite standoff unit comprises a bottom platform, a standoff column, and a threaded portion formed within said standoff column. The bottom platform comprises a bonding surface configured to be attached with said mounting surface. The bonding surface comprises plurality of nubs or protrusions of predefined dimension disposed in a spaced apart manner. The nubs are configured to define a bond-line thickness between said bonding surface and said mounting surface. The standoff column extends vertically from said bottom platform. The standoff column is formed with an inner cavity and has a proximal end and a distal end. The proximal end is formed adjacent to said bottom platform, and the threaded portion is disposed adjacent to said distal end on said inner cavity. The threaded portion is formed of a different material to said standoff column and is molded together with said inner cavity of said standoff column as a single piece.

The invention will now be described by way of example with reference to the accompanying drawings in which:
Figure 1 depicts a top perspective view of the invented composite threaded standoff unit according to an embodiment of the present invention.
Figure 2 is cut-away sectional view of the invented threaded standoff unit illustrating the threaded portion molded at its inner cavity, according to an embodiment of the present invention.
Figure 3 depicts a perspective view of the invented threaded standoff unit turned upside down showing its bonding surface, according to an embodiment of the present invention.

It is an object of the invention to provide a standoff unit where an optimum bond-line thickness of adhesive is achieved when installing the standoff unit without depending on the choice of adhesive.

It is another object of the invention to reduce the number of components in the standoff unit by providing a composite molded threaded portion within said standoff unit.

With the choice of adhesive having minimal curing time, it is a further object of the invention to install a standoff unit without using an applicator, thus reducing carbon foot-print and saving production cost at the same time.

It is a further object of the invention to reduce the material weight from a construction perspective of the invented individual standoff unit leading to a cumulative weight reduction when a huge number of cable harness mounting brackets are put into action.

According to the present invention, the above objects are achieved by providing a composite standoff unit for attaching on a mounting surface. The composite standoff unit comprises a bottom platform, a standoff column, and a threaded portion formed within said standoff column. The bottom platform comprises a bonding surface configured to be attached with said mounting surface. The bonding surface comprises plurality of nubs or protrusions of predefined dimension disposed in a spaced apart manner. The nubs define a bond-line thickness between said bonding surface and said mounting surface. The standoff column extends vertically from said bottom platform. The standoff column is formed with an inner cavity and has a proximal end and a distal end. The proximal end is formed adjacent to said bottom platform, and the threaded portion is disposed adjacent to said distal end on said inner cavity.

According to one aspect of the invention, said plurality of nubs of predefined dimension are placed in a symmetrical manner on the said bonding surface. The nubs may have even spacing therebetween. The standoff unit may comprise at least three of the nubs. The nubs may be provided in a triangular arrangement.

According to another aspect of the invention, said standoff column comprises an outer surface having plurality of longitudinally extending slotted channels defining a non-circular outer periphery of said standoff column. The slotted channels may be disposed in a symmetrical spaced apart manner, and may have even spacing therebetween.

According to the present invention, said threaded portion is molded together with said inner cavity of said standoff column as a single piece. Said threaded portion is formed of a different material to said standoff column, and may be molded onto the interior surface of said standoff column after fabrication of said standoff column.

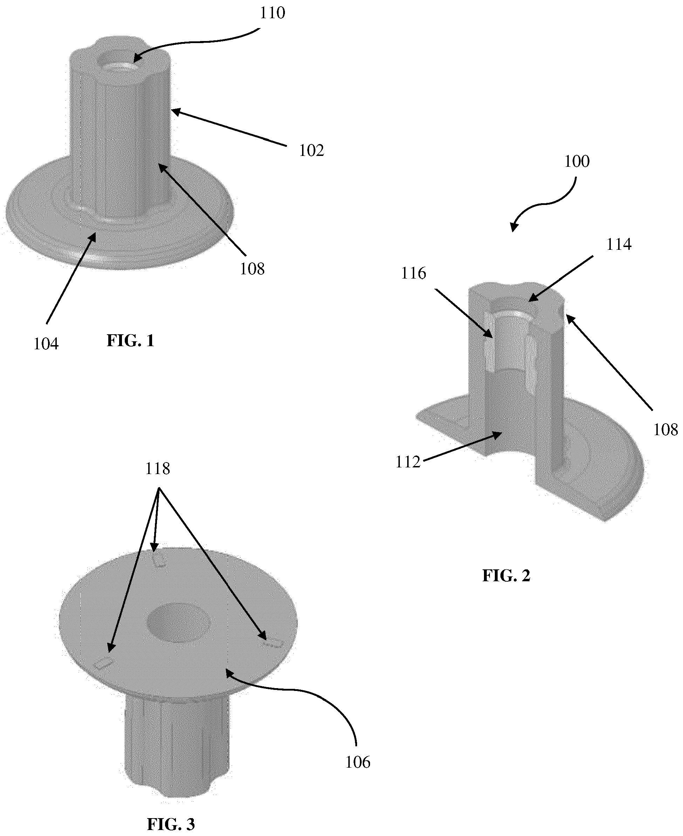

Figure 1 of the accompanying drawings depicts a perspective view of the invented standoff unit (100) showing the structural feature thereof. The standoff unit (100) has a bonding surface (106) which is to be attached with a mounting surface using a bonding agent such as adhesive in order to provide support for conduits, cables, etc. With reference to figures 1 to 3, the standoff unit (100) comprises a bottom platform (104), a standoff column (102), and a threaded portion (116) formed within said standoff column (102).

According to a suitable application of the standoff unit (100), various supporting structures such as screwable clamps may be attached with a distal end (114) of said standoff column (102). For the sake of brevity, the description of engagement of clamps with the standoff column (102), and thereupon insertion of one or more wiring cables and conduits within said clamp is not provided herein. More specifically, the clamps are screwed with said threaded portion (116). Depending on the type of application, various types of clamps can be used at least having a screwing portion that gets attached with said threaded portion (116).

As shown in the cross-sectional view of figure 2, the threaded portion (116) is internally molded with the standoff column (102), more specifically, to an inner cavity (110) of the standoff column (102). This composite molding eliminates the need for additional nut or threading means to be inserted within the standoff column (102). The standoff column (102), according the preferred embodiment, extends from the bottom platform (104) in a vertical direction, for example in a direction perpendicular to a plane of said bottom platform (104). The proximal end (112) of the standoff column (102) is formed as a continuous part with the bottom platform (104).

The outer surface of the standoff column (102) comprises a plurality of longitudinally extending slotted channels (108). The channels result in reduction of molding material and reduction of overall weight of said standoff unit (100). The slotted channels (108) are preferably disposed in a symmetrical spaced apart manner with even spacing therebetween, defining a non-circular outer periphery of said standoff column (102). The inner cavity (110) of the standoff column (102) has a smooth cylindrical profile having said threaded portion (116) formed adjacent to the distal end (114) of the standoff column (102).

With reference to figure 3 of the accompanying drawings, the bottom platform (104) comprises a bonding surface (106) provided with plurality of nubs (118) that are disposed in a spaced apart manner. In the present embodiment, three nubs (118) are provided on the bonding surface (106) of said bottom platform (104) in a symmetrical manner with even spacing therebetween. The shape of said nubs (118), according to one embodiment, is hemispherical. A person skilled in the art would appreciate the fact that the functionality of said nubs (118) are not limitative to their shape, number, placement or dimension. The dimension or extension of said nubs (118) are selected based on the requirement of the installation site depending upon the requirement of thickness of adhesive.

In order to attach said standoff unit (100) to a mounting surface, first an adhesive is put on the bonding surface (106). Then the standoff unit (100) is pressed against the mounting surface until an optimum bond-line thickness or gap is created between the mounting surface and the bonding surface (106) having the adhesive in between. The gap is defined by the dimension of said nubs (118), which in turns also defines the optimum thickness of adhesive layer between the mounting surface and said bonding surface (106). For the purpose of attaching said standoff unit (100) with glass bead type adhesive, the dimension of said nubs (118) can also the chosen in-line with the dimension of the glass beads.

As already mentioned, the foregoing description is illustrative of the invention and not limitative to its scope as determined by the claims, because it will be apparent to persons skilled in the art to devise other alternative embodiments without departing from the broad ambit of the disclosures made herein.

## Claims

1. A composite standoff unit (100) for attaching on a mounting surface, wherein said composite standoff unit (100) comprises:
- a bottom platform (104) comprising a bonding surface (106) configured to be attached with said mounting surface, said bonding surface (106) comprising a plurality of nubs (118) of predefined dimension disposed in a spaced apart manner whereby said nubs (118) are configured to define a bond-line thickness between said bonding surface (106) and said mounting surface; and
- a standoff column (102) extending vertically from said bottom platform (104), said standoff column (102) being formed with an inner cavity (110) and having:
- a proximal end (112) formed adjacent to said bottom platform (104), and
- distal end (114), and
- a threaded portion (116) disposed adjacent to said distal end (114) on said inner cavity (110),
**characterised in that** said threaded portion (116) is formed of a different material to said standoff column (102) and is molded together with said inner cavity (110) of said standoff column (102) as a single piece.

2. The composite standoff unit (100) as claimed in claim 1, wherein said plurality of nubs (118) of predefined dimension are placed in a symmetrical manner on the said bonding surface (106).

3. The composite standoff unit (100) as claimed in claim 1 or 2, wherein said standoff column (102) comprises an outer surface having plurality of longitudinally extending slotted channels (108) defining a non-circular outer periphery of said standoff column (102).

## Patentansprüche

1. Verbundabstandseinheit (100) zum Befestigen an einer Montagefläche, wobei die genannte Verbundabstandseinheit (100) Folgendes umfasst:
- eine Bodenplattform (104) mit einer Klebefläche (106), die zum Anbringen an der genannten Montagefläche konfiguriert ist, wobei die genannte Klebefläche (106) mehrere Noppen (118) mit vordefinierten Abmessungen aufweist, die voneinander beabstandet angeordnet sind, wobei die genannten Noppen (118) zum Definieren einer Klebeliniendicke zwischen der genannten Klebefläche (106) und der genannten Montagefläche konfiguriert sind; und
- eine Abstandssäule (102), die sich vertikal von der genannten unteren Plattform (104) erstreckt, wobei die genannte Abstandssäule (102) mit einem inneren Hohlraum (110) ausgebildet ist und Folgendes aufweist:
- ein proximales Ende (112), das neben der genannten unteren Plattform (104) ausgebildet ist, und
- ein distales Ende (114), und
- einen Gewindeabschnitt (116), der neben dem genannten distalen Ende (114) an dem genannten inneren Hohlraum (110) angeordnet ist,
**dadurch gekennzeichnet, dass** der genannte Gewindeabschnitt (116) aus einem anderen Material als die genannte Abstandssäule (102) gebildet ist und zusammen mit dem genannten inneren Hohlraum (110) der genannten Abstandssäule (102) als einziges Stück geformt ist.

2. Verbundabstandseinheit (100) nach Anspruch 1, wobei die genannten mehreren Noppen (118) mit vordefinierten Abmessungen symmetrisch auf der genannten Klebefläche (106) angeordnet sind.

3. Verbundabstandseinheit (100) nach Anspruch 1 oder 2, wobei die genannte Abstandssäule (102) eine Außenfläche mit mehreren sich longitudinal erstreckenden Schlitzkanälen (108) aufweist, die einen nicht kreisförmigen Außenumfang der genannten Abstandssäule (102) definieren.

## Revendications

1. Unité d'écartement composite (100) pour une fixation sur une surface de montage, ladite unité d'écartement composite (100) comprenant :
- une plate-forme inférieure (104) comprenant une surface de liaisonnement (106) configurée pour être fixée à ladite surface de montage, ladite surface de liaisonnement (106) comprenant une pluralité de protubérances (118) ayant une dimension prédéfinie disposées en une manière d'espacement en vertu de quoi lesdites protubérances (118) sont configurées pour définir une épaisseur de ligne de liaisonnement entre ladite surface de liaisonnement (106) et ladite surface de montage ; et
- une colonne d'écartement (102) s'étendant verticalement depuis ladite plate-forme inférieure (104), ladite colonne d'écartement (102) étant formée avec une cavité interne (110) et ayant :
- une extrémité proximale (112) formée en position adjacente à ladite plate-forme inférieure (104), et
- une extrémité distale (114), et
- une portion filetée (116) disposée en position adjacente à ladite extrémité distale (114) de ladite cavité interne (110),
**caractérisée en ce que** ladite portion filetée (116) est formée en un matériau différent par rapport à ladite colonne d'écartement (102) et est moulée ensemble avec ladite cavité interne (110) de ladite colonne d'écartement (102) en tant que pièce d'un seul tenant.

2. Unité d'écartement composite (100) telle que revendiquée dans la revendication 1, dans laquelle ladite pluralité de protubérances (118) à dimension prédéfinie sont placées suivant une manière symétrique sur ladite surface de liaisonnement (106).

3. Unité d'écartement composite (100) telle que revendiquée dans la revendication 1 ou 2, dans laquelle ladite colonne d'écartement (102) comprend une surface externe ayant une pluralité de canaux rainurés s'étendant longitudinalement (108) qui définissent une périphérie externe non circulaire de ladite colonne d'écartement (102).
